# EUROPEAN PATENT APPLICATION

(11) **EP 1 574 669 A2**
(43) Date of publication of application: **14.09.2005**
(21) Application number: 05250784.5
(22) Date of filing: 11.02.2005
(51) Int. Cl.: F01D 5/18, F01D 25/12

(54) **Impingement cooling arrangement witin turbine blades**

(30) Priority: 10.03.2004 GB 0405322
(71) Applicant: ROLLS-ROYCE PLC, London, SW1E 6AT (GB)
(72) Inventor: Chambers, Andrew, Oxford, OX3 0SP (GB); Ireland, Peter, Oxford OX1 4SZ (GB); Gillespie, David, Oxford OX4 1PE (GB); Dailey, Geoffrey Matthew, Derby DE15 0SG (GB)
(74) Representative: Gunn, Michael Alan

(57) **Abstract**

An impingement cooling arrangement 200 comprises a projection 208 which extends partially across a coolant passage 201 upstream of a jet aperture 205. In such circumstances, an end surface 209 of the projection 208 increases the available surface area for heat exchange with a cross flow 204 whilst a coolant air flow 206 jetted from the jet aperture 205 can transgress a proportion of the air flow 204a passing between the end surface 209 and a junction surface 203 incorporating the jet aperture 205. By providing a spacing gap B between the end surface 209 and the junction surface 203 it is possible to avoid localised distortions to the cross flow 204 whilst the projection 208 still provides that the coolant air flow 206 projected from the jet aperture 205 mostly passes through a lower turbulence wake downstream of the projection 208 for greater impingement upon a target surface 202 for heat transfer and cooling efficiency. Typically the impingement cooling arrangement 200 is incorporated within turbine blades or vanes of a jet engine such that a multitude of such arrangements 200 are provided in a particular sizing and distribution to achieve the desired operational performance.

## Description

The present invention relates to an impingement cooling arrangement and more particularly to such arrangements used in turbine engines for such situations as cooling within hollow vanes or other structures.

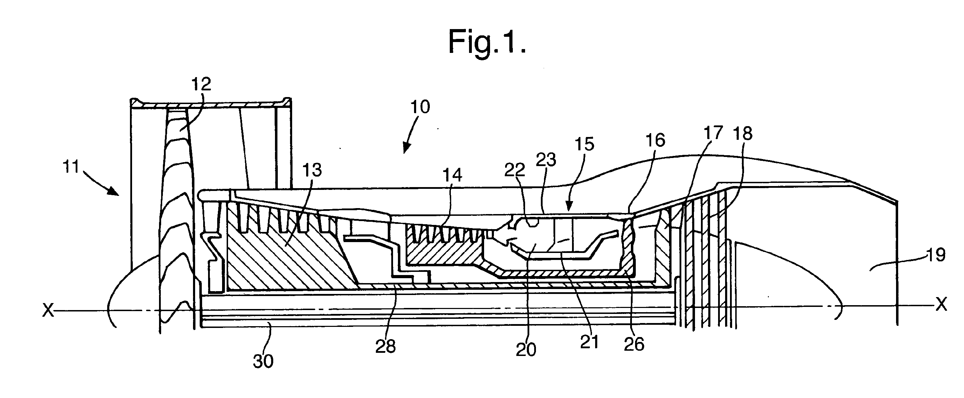

Referring to Fig. 1, a gas turbine engine is generally indicated at 10 and comprises, in axial flow series, an air intake 11, a propulsive fan 12, an intermediate pressure compressor 13, a high pressure compressor 14, combustion equipment 15, a high pressure turbine 16, an intermediate pressure turbine 17, a low pressure turbine 18 and an exhaust nozzle 19.

The gas turbine engine 10 works in a conventional manner so that air entering the intake 11 is accelerated by the fan 12 which produce two air flows: a first air flow into the intermediate pressure compressor 13 and a second air flow which provides propulsive thrust. The intermediate pressure compressor compresses the air flow directed into it before delivering that air to the high pressure compressor 14 where further compression takes place.

The compressed air exhausted from the high pressure compressor 14 is directed into the combustion equipment 15 where it is mixed with fuel and the mixture combusted. The resultant hot combustion products then expand through, and thereby drive, the high, intermediate and low pressure turbines 16, 17 and 18 before being exhausted through the nozzle 19 to provide additional propulsive thrust. The high, intermediate and low pressure turbine 16, 17 and 18 respectively drive the high and intermediate pressure compressors 14 and 13, and the fan 12 by suitable interconnecting shafts.

In view of the above it will be appreciated that a number of sections of an engine must be cooled in order to remain within acceptable operational parameters for the materials used. Nevertheless, higher temperatures provide greater engine efficiency and it is to reconcile these conflicting factors that cooling is necessary and desirable to the greatest extent possible.

An example of an impingement cooling arrangement is that given with regard to vanes used for directing hot gases in a turbine engine. Typically these vanes are hollow to facilitate such cooling and also to reduce necessary weight. In such circumstances air flows are presented into each vane in order that through impingement there is cooling of the vane surface and structure. Clearly, achieving the most efficient heat transfer and therefore cooling efficiency possible in the circumstances is desirable. Cross flows which induce flow distortions and turbulence can significantly reduce heat transfer efficiency. U.S. Patent Number 4105364 (Rolls Royce Ltd) illustrates a vane arrangement in which pedestal sections extend across the whole hollow width of a vane upstream of holes or apertures such that a cross flow has a flow wake downstream of the pedestal elements and there is less disturbance in the coolant air flow jetting from the holes or apertures prior to impingement upon a surface for heat transfer and cooling.

These pedestals themselves can create significant turbulence problems particularly adjacent to the surfaces of the hollow vane across which they extend. In such circumstances there is still the possibility for further improvement of the heat transfer and therefore cooling efficiency within an engine.

In accordance with the present invention there is provided an impingement cooling arrangement for an engine, the arrangement comprising a coolant passage with a jet aperture, the coolant passage including a target surface whereby in use a coolant flow jetted through the jet aperture is directed for heat transfer towards the target surface and the target surface includes a projection upstream of the jet aperture directed towards a junction surface including the jet aperture such that an end of that projection is spaced from the junction surface to limit localised flow distortion about the jet aperture whilst providing a flow wake downstream of the projection which in use allows for a more consistent coolant flow directed towards the target surface due to less cross-flow deflection.

Typically, the projection has a cylindrical structure. Normally, the projection extends perpendicularly to the target surface. Alternatively, the projection is tapered or oval or otherwise shaped to ensure limited localised flow distortion.

Normally, the projection extends up to two thirds of the distance from the target surface to the junction surface. Possibly, the projection will have at least a section which has a cross section similar to the jet aperture cross section.

Furthermore, the present invention includes a component incorporating a plurality of arrangements as described above. Additionally, that component may be part of an engine.

An embodiment of the present invention will now be described by way of example and with reference to the accompanying drawings in which:
Fig. 2 is a schematic side view of an engine vane; and
Fig. 3 is a schematic side view of an impingement cooling arrangement in accordance with the present invention.

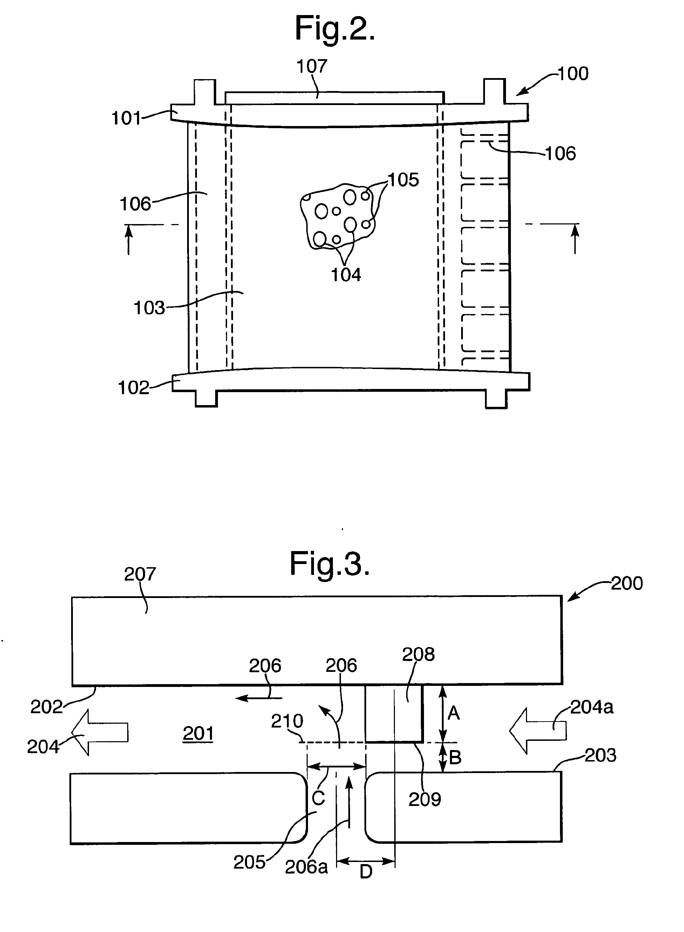

Referring to Fig. 2 illustrating a vane 100 comprising end sections 101, 102 between which a vane surface 103 is defined. The vane surface 23 forms a hollow vane within which projections 104 extend upstream of apertures 105 in a cross flow within the hollow vane 100. Within the vane 100, distribution pathways and galleries shown as broken lines 106, are provided in order to distribute coolant air flow from an inlet within the vane 100 in order to provide appropriate cooling. Essentially air is jetted through the apertures 105 towards a target surface of the vane in order to provide through heat transfer to the coolant air flow cooling of the vane 100.

The general configuration depicted in Fig. 2 is consistent with previous impingement cooling arrangements, for example that described in U.S. Patent Number 4105364, but in accordance with the present invention the projections 104 do not extend completely across between the hollow between those surfaces 103 of the vane 100. The projections 104 only extend partially across such that a top surface of each projection 104 is spaced from a junction surface within which the apertures 105 are located as jets for projection of the coolant air flow to the opposed target surface from which the projections 104 extend.

As indicated above turbulence within the coolant passage of the vane hollow can significantly effect the heat transfer and therefore cooling efficiency of the arrangement. The projections 104, although creating a less turbulent wake downstream themselves can, through localised flow acceleration around the edges of the projections 104, increase turbulence within the wash of each flow wake behind the projections 104. These wash turbulence distortions are a particular problem adjacent junction surfaces about the projections 104. Thus, according to the present invention, the wash turbulence or localised flow distortion caused by a projection 104 is minimised at the injection side or junction surface. It will be understood that the projected coolant airflow has greatest force when initially jetted from a jet aperture 105 and so has most resistance to a cross flow at this position. The force of the jet reduces with projected distance from the jet aperture. In these circumstances providing an open space between a projection end surface to a junction surface including the aperture 105 ensures that there is substantial laminar flow about the jet aperture across which the relatively forceful coolant jet may transgress with a then ripple wash layer over the end surface beyond which there is a less turbulent wake due to the projection through which the now less forceful coolant flow can travel towards its target surface for heat exchange and then entrainment with the rest of the cross flow for cooling effect.

Fig. 3 is a schematic side illustration of an impingement cooling arrangement 200 in accordance with the present invention. Thus, a coolant passage 201 is formed between a target surface 202 and a junction surface 203. A cross flow depicted by arrow heads 204 is presented through the coolant passage 201. This cross flow 204 is produced by coolant flows from jet apertures in the junction surface 203 at other upstream locations. It will be appreciated that Fig. 3 only illustrates one impingement cooling arrangement whilst normally there would be a large number of arrangements appropriately distributed and positioned in order to achieve cooling efficiency.

In the junction surface 203, a jet aperture 205 is positioned in order to project a coolant jet towards the target surface 202. This coolant jet in the direction of arrowhead 206 will impinge upon the target surface 202 so that there is heat transfer to that coolant flow 206 in order to provide cooling of the component 207 incorporating the target surface 202. Typically as indicated above this component 207 will be a vane within a turbine engine.

In accordance with the present invention a projection 208 is presented upstream of the jet aperture 205. This projection 208 extends in a direction across the passage 203 such that an end surface 209 is spaced from the junction surface 203. In such circumstances the projection 208 creates a less turbulent wake immediately down stream of the projection 208 whereby the coolant flow 206 can then more effectively impinge upon the target surface 202 for heat transfer. Typically, the end surface 209 is positioned up to two thirds of the distance between the target surface 202 and the junction surface 203. In such circumstances the dimension A will be twice the spacing gap B.

Generally, the projection 208 will be a cylindrical pimple with a flat surface 209. However, other shapes may be used including oval or tapered or, as depicted in fig. 2, truncated or flat sided cross sections in order to achieve the desired aerodynamic flow control for flow disturbance limitation and controlled utilisation.

In the above circumstances, generally speaking, the portion of cross flow 204a presented across the passage 201 has two segments. A first segment incident upon the projection 208 in the dimension A as indicated above will substantially have a turbulence wake downstream of that projection 208 which will allow the coolant airflow 206 to more appropriately achieve heat transfer through the target surface 202. A segment equivalent to the space gap B essentially passes straight over the jet aperture 205. It will also be appreciated that there will be a ripple wash layer 210 between the respective segments of the cross flow 204a. In such circumstances a coolant air flow 206a presented through the jet aperture 205 crosses the flow segment of cross flow 204a in the space gap B and the ripple layer 210 before moving across the flow wake behind the projection 208 for onward impingement upon the target surface 202. As indicated above the coolant airflow 206a due to the entrainment of the jet aperture 205 is generally more forceful and therefore more capable of crossing this segment (space gap B) and ripple layer 210 than the air flow 206 at more displaced positions as it progresses across the passage 201.

As shown, typically the projection 208 will be positioned upstream relative to the jet aperture 205 for appropriate presentation of the flow wake with reduced cross-flow turbulence. The actual position and size of the projection 208 will be determined by operational requirements. It will be appreciated that the flow wakes from one projection 208 will impinge upon other projections/jet aperture combinations in the coolant passage 201. In such circumstances care will be taken with regard to the size, positioning and shape of the respective projections 208 within a coolant passage 201 for best overall performance in terms of providing cooling efficiency. It will also be understood that different sized projections could be positioned at different locations to achieve the desired best heat transfer performance. In particular, the space gap B between the end surface 209 and the junction surface 203 may be varied between different locations within the passage 201.

Normally the projections 208 will be formed from a relatively high conductivity material themselves in order to allow heat transfer to the cross flow 204 for further heat dissipation from a thermally connected component 207.

Typical dimensions for an impingement cooling arrangement in accordance with the present invention would provide for a jet aperture 205 diameter C in the order of 0.6mm with the projection 208 similarly having a cylindrical shape with a diameter of 0.6mm such that there is a 0.6mm displacement distance D between the centre of the jet aperture 205 and that of the projection 208. As indicated above, typically the projection 208 will extend in the direction from the target surface 202 to the junction surface 203 to in the order of two thirds of the width. Thus, for a 0.9mm wide coolant passage the dimension A will be in the order of 0.6mm with the space gap B in the order of 0.3mm.

The end surface 209 may be flat or itself include ripples or pimples in order to provide control of the ripple layer 210 between the less turbulent cross flow wake downstream of the projection 208 and the unobstructed flow of the cross flow 204a through the space gap B.

As illustrated in Fig. 3 typically the corner edges of the jet apertures 205 will be rounded. In such circumstances the possibility of flow cleavage vortexes at these corners is reduced. Such vortexes may effectively narrow the available cross section of the jet aperture 205 reducing the cooling efficiency by acting as a restraint upon coolant airflow 206 impingement upon the target surface 202 for heat transfer and therefore heat dissipation in the consolidated cross flow 204 from all the impingement cooling arrangements in accordance with the present invention within the coolant passage 201.

A coolant impingement arrangement in accordance with the present invention provides an improvement to heat transfer performance where many flow jet apertures are provided. It will be understood that analysis of previous arrangements has indicated that heat transfer performance deteriorates towards the end of a hollow coolant passage or channel below that expected of a successful coolant air flow impingement upon a target surface. Such reduction in the heat transfer performance is generally due to cross flow from upstream jet apertures resulting in a high cross flow strength which deflects coolant air flow from down stream jet apertures before successful impingement on the target surface. By use of projections 208 in accordance with the present invention at particular positions and configurations these projections 208 achieve a significant improvement in heat exchange performance. The projections 208 are positioned upstream of the jet apertures in order to create the desired turbulence wake for good heat transfer impingement. Generally there are two mechanisms by which heat transfer performance is improved is accordance with the present invention. Firstly, the coolant passage cross flow encounters the projection 208 leading to a high heat transfer co-efficient over the increased surface available due to that projection. Thus, as indicated above generally the projection 208 is made from a high thermally conductive material such as copper but clearly this material will be dependent upon weight and desired properties in order to further improve heat transfer. The surface of the projection 208 may be stippled in order to create increased surface area and micro surface flow effects for higher heat transfer. Secondly, the cross flow upon encountering the projection 208 is deflected significantly either side of that projection 208. In such circumstances a turbulent wake is created downstream of the projection 208 and the impingement air cooling jet 206 is less deflected in that wake region than would be the case without the projection 208. Without the significant deflection of the airflow 206 there is less waste of heat transfer potential associated with a high pressure drop upon impinging with the target surface 202 by that flow 206. The projection 208 shields the airflow 206 from the cross flow 204 for most of its trajectory across the passage 201. This shielding of the air flow 206 jet greatly improves impingement performance and therefore heat transfer to the air flow 206 for cooling purposes.

As indicated above, the exact size and position of each projection is not critical but the projection needs to be placed where it can shield the air flow jet from the jet aperture against the cross flow as a result of upstream jet air flows. In short the projection element must shield the air flow jet from the cross flow such that the coolant airflow from the jet aperture is better able to reach the target surface and therefore achieve higher transfer performance. The projection itself also provides enhanced heat transfer performance due to the greater contact surface area provided by the projection in addition to the target surface. It will be understood that there is a penalty with regard to additional pressure drop as a result of the presence of the projection but this pressure drop is relatively small and can normally be limited to no greater than a 25% increase in pressure drop. Such a pressure drop is acceptable as there is a relatively high input pressure through the jet aperture at initial launch. Furthermore, by aligning the jet aperture and the projection the acceptability of a reduced pressure drop is improved due to the coolant air jet impingement helping pressure recovery downstream of the projection in the reduced cross-flow turbulence wake.

As indicated above, generally the present coolant impingement arrangement will be utilised within turbine blades or nozzle guide vanes of turbine engines in order to provide appropriate cooling arrangements for those components and structures.

As indicated above, the present invention in particular relates to strategic positioning of the projection 208 in order to achieve a wake behind that projection 208 within which the airflow 206 can achieve better impingement upon the target surface 202. The sizing of both the jet aperture and projection as well as their relative position and distribution to each other and other jet apertures/projection arrangements will be determined by necessary operational requirements. Normally, as illustrated in fig. 3 the end surface 209 will be substantially parallel with the junction surface 203 such that the segment of the cross flow 204a then experiences a uniform cross section between the surfaces 209, 203 and the disturbance both at the mouth of the jet aperture 205 and at the ripple layer 210 is minimised. It will be understood the proportion of the cross flow 204 passing between the surfaces 203, 209 will itself be jetted or substantially collimated due to the constriction between these two surfaces 203, 209. It will be understood that the spacing gap B orientation of the surface 209 and overall positioning of the projection 208 relative to the jet aperture 205 will be such that there is a limitation to the localised flow distortion about the junction of the jet aperture 205 in the junction surface 203 and the coolant passage 201. In such circumstances the coolant airflow 206 which is normally presented on a perpendicular direction to the cross flow 204 will penetrate across the substantially collimated proportion of cross flow 204a into the reduced turbulence wake of the projection 208 for better impingement upon the target surface 202. The spacing gap B between the surface 209 and the junction surface 203 ensures that the previous problems at junction surfaces associated with pedestal or fully across projection members between the opposed junction surface 203 and target surface 202 are reduced whilst the additional availability of the end surface 209 for heat exchange improves cooling efficiency in itself.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

**1.** An impingement cooling arrangement for an engine (10), the arrangement comprising a coolant passage (201) with a jet aperture (105), the coolant passage (201) including a target surface (202) whereby in use a coolant flow jetted through the jet aperture (105) is directed for heat transfer towards the target surface (202) and the target surface (202) includes a projection (208) upstream of the jet aperture (105) directed towards a junction surface (203) including the jet aperture (105) **characterised in that** an end of that projection (208) is spaced from the junction surface (203) to limit localised flow distortion about the jet aperture (105) whilst providing a flow wake downstream of the projection (208) which in use allows for a more consistent coolant flow directed towards the target surface (202) due to less cross-flow deflection.

**2.** An arrangement as claimed in claim 1 **characterised in that** the projection (208) has a cylindrical structure.

**3.** An arrangement as claimed in claim 1 **characterised in that** the projection (208) is tapered or oval or otherwise shaped to ensure limited localised flow distortion.

**4.** An arrangement as claimed in any of claims 1, 2 or 3 **characterised in that** the projection (208) extends perpendicularly to the target surface (202).

**5.** An arrangement as claimed in any preceding claim **characterised in that** the projection (208) extends up to two thirds of the distance from the target surface (202) to the junction surface (203).

**6.** An arrangement as claimed in any preceding claim **characterised in that** the projection (208) has at least a section which has a cross-section similar to the jet aperture (105) cross section.

**7.** A component incorporating a plurality of arrangements as claimed in any preceding claim.

**8.** An engine incorporating a component as claimed in claim 7.

**10.** Any novel subject matter or combination including novel subject matter disclosed herein, whether or not within the scope of or relating to the same invention as any of the preceding claims.
